# EUROPEAN PATENT APPLICATION

(11) **EP 3 159 188 A1**
(43) Date of publication of application: **26.04.2017**
(21) Application number: 14895342.5
(22) Date of filing: 07.10.2014
(51) Int. Cl.: B60C 11/24

(54) **RACING TIRE WITH WEAR INDICATOR**

(30) Priority: 17.06.2014 RU 2014124543
(71) Applicant: Lebedev, Dmitrij Aleksandrovich, Dubovoe 308501 (RU); Inntarget LLC, Belgorod (RU)
(72) Inventor: LEBEDEV, Dmitrij Aleksandrovich, Dubovoe (RU)
(74) Representative: Chimini, Francesco
(86) International application number: PCT/RU2014/000751
(87) International publication number: WO 2015/194988

(57) **Abstract**

This technical solution relates to Racing Tires of the type "Slick" with a Wear Indicator coated onto a tire providing visual determination of its wear rate. The technical solution is presented as a racing slick type tire with a colored pigment coated on its surface which is a wear indicator in the shape of lines (any geometrical shapes). The wear indicator is coated with several layers; each layer varies in color depending on the tire wear depth. The claimed tires provided with a wear indicator are designed for car racing including race open wheel cars (karting and Formula car racing); the indicator can be monitored by a driver which allows estimation of the tire wear rate while a car is moving.

## Description

This technical solution relates to Racing Tires with a Wear Indicator coated onto a tire providing visual determination of its wear rate.

The claimed tires of slick type provided with a wear indicator are designed for car racing including race open wheel cars (karting and Formula car racing).

The tire provided with a tread wear indicator (RU 2390428 C1, issue date 27.05.2010) is known. Its tread pattern is a hybrid of the pattern with cross ribs spaced around the circumference of the tire and/or the block-shaped pattern. It has at least one circumferential groove wherein the indicator is arranged in the surface part of the pattern in the circumferential ribs or blocks which are in contact with the road surface, and is in form of radial sipes in the tire tread. The greatest depth of the indicator sipes is less than the circumferential groove depth. The disadvantage of this invention is that the indicator shape and size do not allow estimation of the tire wear rate from a great distance.

A method of estimating irregular wear of tires by recording the wear rate of painted tire spots at different time intervals (US 5874670 A, issue date 23.02.1999) is known. This method implies that the paint is coated on the tire tread surface in a regular manner. The wear rate of the paint is recorded as a plurality of image information at certain time intervals. The image information is divided into a number of pixels. The wear rate values are mapped and used to estimate irregular wear occurring state on the tread surface.

The major disadvantage of the above mentioned method is determination of the wear rate by using dedicated equipment only.

The closest prior art is Patent FR 2834933 A1, issue date 25.07.2003, Pneumatic tire comprising layer of different-colored rubber in tread to indicate maximum permitted wear. The tire comprises an indicator level of different-colored rubber between an outer layer of the tread and an inner layer.

The disadvantage of this prior art is lack of visual estimation of tire tread wear rate while the vehicle is moving. Tires of this type comprise an indicator of different-colored rubber between an outer layer of the tread and an inner layer and are applied for commuter cars.

The claimed racing Slick tire does not have any tread or grooves, i.e. its surface is perfectly smooth. Therefore a colored indicator in the shape of lines (any geometrical shapes) is coated onto the tire surface. This type of tires is designed for race open wheel cars, and thus the indicator can be monitored by a driver which allows estimation of the tire wear rate during driving.

The goal of the author is creation of a racing slick tire with an indicator allowing a driver to estimate the tire wear rate visually while a race car is moving. The task is solved by introducing a colored pigment in the shape of lines functioning as wear indicator into the racing tire rubber structure. The lines are of several layers and vary in color depending on the tire wear depth.

The essence of the present technical solution is a possibility for a driver to estimate the tire wear rate visually while a race car is moving. This goal is reached by coating a colored pigment in the shape of lines functioning as wear indicator onto the racing tire surface, and these lines are of several layers and vary in color depending on the tire wear depth.

The invention comprises a racing tire 1, a colored pigment 2 in the shape of lines functioning as wear indicator coated onto the tire surface. The lines are of several layers and vary in color depending on the tire wear depth.

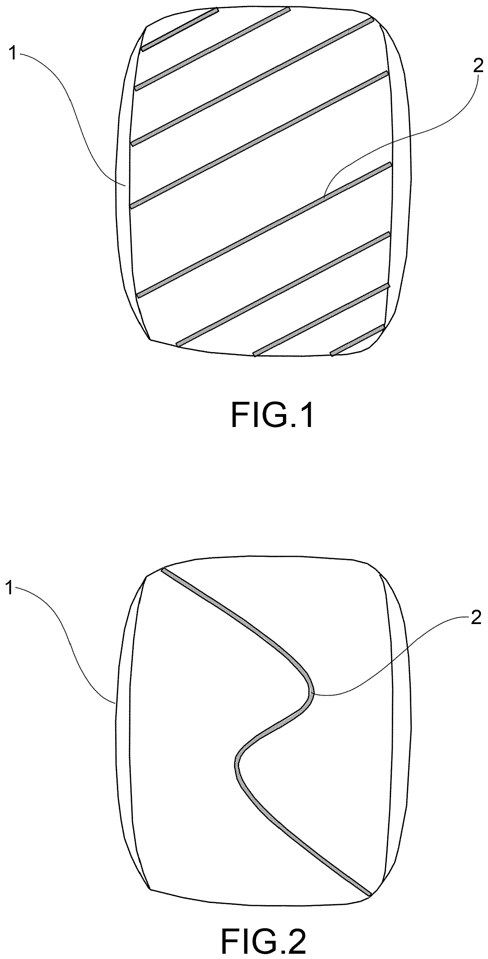

Figure 1 is a view of racing tire 1 with wear indicator 2 in the shape of yellow straight lines;
Figure 2 is a view of racing tire 1 with wear indicator 2 in the shape of a white curved line;

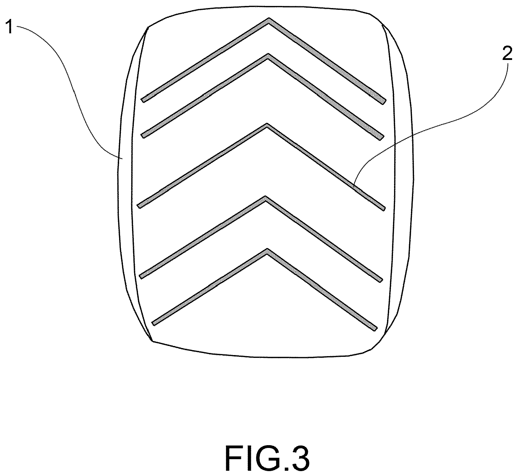

Figure 3 is a view of racing tire 1 with wear indicator 2 in the shape of red crooked lines.

### Implementation of the Technical Solution.

During car racing tires are subject to inevitable wearing and scuffing, and it is impossible to determine the extent of wear while a race car is moving. The present invention solves this challenge by coating a colored pigment 2 in the shape of lines functioning as wear indicator coated onto the tire surface. The lines are of several layers and vary in color depending on the tire wear depth. Wear indicator 2 coated with several layers allows a driver to determine the wear rate of tire 1 visually directly while a race car is moving as each layer of wear indicator 2 varies in color. It gives him an opportunity to choose the right driving tactics and control how soon he will need to drive into the box to change a rubber set. The estimation of the tire wear rate allows diagnostics of correct chassis adjustment which is a key point of race car settings.

Thus, the goal of the author to create a racing slick tire provided with an indicator allowing a racing driver to estimate the tire wear rate visually while a race car is moving has been reached.

## Claims

1. A racing tire provided with a wear indicator which is different from the previous ones as its wear indicator is presented as a colored pigment introduced into race car rubber structure in the shape of lines which are of several layers and vary in color depending on the tire wear depth.

## Amended claims

### Amended claims under Art. 19.1 PCT

**1.** A racing tire of the type "Slick" provided with a wear indicator which is different from the previous ones as its wear indicator is presented as a colored pigment introduced into race car rubber structure in the shape of lines which are of several layers and vary in color depending on the tire wear depth.
